(19) Europäisches Patentamt / European Patent Office / Office européen des brevets

(11) **EP 1 564 527 B1**

(12) **FASCICULE DE BREVET EUROPEEN**

| (45) Date de publication et mention de la délivrance du brevet: **09.04.2008 Bulletin 2008/15** | (51) Int Cl.: *G01C 21/12* (2006.01) *G05D 13/00* (2006.01) *B64D 31/08* (2006.01) *G08G 5/00* (2006.01) *G05D 1/02* (2006.01) |

(21) Numéro de dépôt: **05290051.1**

(22) Date de dépôt: **10.01.2005**

(54) **Procédé et dispositif de calcul d'une vitesse de consigne pour un aéronef**

Verfahren und Vorrichtung zur Sollgeschwindigkeitsberechnung für ein Luftfahrzeug

Method and device for computing a target speed for an aircraft

(84) Etats contractants désignés:
**AT BE BG CH CY CZ DE DK EE ES FI FR GB GR HU IE IS IT LI LT LU MC NL PL PT RO SE SI SK TR**

(30) Priorité: **16.02.2004 FR 0401516**

(43) Date de publication de la demande:
**17.08.2005 Bulletin 2005/33**

(73) Titulaire: **AIRBUS France**
**31060 Toulouse (FR)**

(72) Inventeur: **Bouchet, Christophe**
**31300 Toulouse (FR)**

(74) Mandataire: **Hauer, Bernard**
**Cabinet Bonnétat**
**29, Rue de Saint-Pétersbourg**
**75008 Paris (FR)**

(56) Documents cités:
**FR-A- 2 749 933**　　　**US-A- 5 121 325**
**US-B1- 6 507 782**

EP 1 564 527 B1

**Description**

La présente invention concerne un procédé et un dispositif de calcul d'au moins une vitesse de consigne pour un aéronef, en particulier un avion de transport militaire, qui est guidé à ladite vitesse de consigne suivant un plan de vol présentant au moins une contrainte de temps.

Dans le cadre de la présente invention, on entend par contrainte de temps une contrainte qui oblige l'aéronef à rejoindre un point de vol particulier à un temps prédéterminé.

Généralement, pour réaliser un tel procédé, on met en oeuvre de façon répétitive la suite d'étapes suivantes :

a) on détermine le temps effectif auquel l'aéronef rejoint ledit point de vol particulier, en tenant compte de la vitesse de consigne actuelle ;

b) on calcule un intervalle de temps correspondant à la différence entre ledit temps prédéterminé et ledit temps effectif ;

c) on compare cet intervalle de temps à une durée de comparaison ; et

d) on remet à jour ladite vitesse de consigne que l'on applique à l'aéronef, dès que ledit intervalle de temps effectif devient supérieur à ladite durée de comparaison.

Un tel procédé usuel de calcul (et de remise à jour) de la vitesse de consigne entraîne en général une remise à jour quasi permanente de ladite vitesse de consigne, notamment en raison de variations incessantes de paramètres internes et externes (à l'aéronef), qui sont utilisés de façon usuelle pour ce calcul, tels que les caractéristiques du vent en particulier. Ceci est d'autant plus vrai que la durée de comparaison est généralement réduite et correspond à quelques secondes de vol le plus souvent.

Ce procédé connu nécessite donc une capacité de calcul importante et surtout entraîne une fluctuation permanente de la vitesse de consigne, ce qui est très pénalisant, puisque :

- d'une part, cette fluctuation entraîne une baisse de confort des passagers de l'aéronef, qui est piloté à ladite vitesse de consigne ; et
- d'autre part, toute fluctuation rend nécessaire la remise à jour d'autres paramètres de prédiction qui dépendent de ladite vitesse de consigne.

Par ailleurs, par le document US-A-5 121 325, on connaît un système pour calculer une vitesse de consigne pour un aéronef, permettant de satisfaire une contrainte de temps qui contraint l'aéronef à rejoindre un point de vol particulier d'arrivée à un temps prédéterminé. Pour ce faire, ce système connu calcule l'intervalle de temps entre le temps d'arrivée effectif et le temps d'arrivée requis. Puis, il compare cet intervalle de temps à une durée de comparaison et, si nécessaire, il met en oeuvre une remise à jour de prédictions. La durée de comparaison prévue par ce document antérieur est variable et dépend de la durée qui reste à parcourir.

La présente invention a pour objet de remédier aux inconvénients précités. Elle concerne un procédé de calcul (et de remise à jour) d'au moins une vitesse de consigne pour un aéronef qui est guidé à ladite vitesse de consigne suivant un plan de vol présentant au moins une contrainte de temps qui contraint l'aéronef à rejoindre un point de vol particulier à un temps prédéterminé, procédé qui permet de réduire considérablement le nombre de remises à jour de la vitesse de consigne.

A cet effet, selon l'invention, ledit procédé selon lequel :

a) on détermine le temps effectif auquel l'aéronef rejoint ledit point de vol particulier, en tenant compte de la vitesse de consigne actuelle ;

b) on calcule un intervalle de temps correspondant à la différence entre ledit temps prédéterminé et ledit temps effectif ;

c) on compare cet intervalle de temps à une durée de comparaison qui est variable et qui dépend de la distance effective entre la position actuelle de l'aéronef et ledit point de vol particulier de manière à diminuer au moins en partie lorsque ladite distance effective diminue ; et

d) on remet à jour ladite vitesse de consigne que l'on applique à l'aéronef,

si ledit intervalle de temps est supérieur à ladite durée de comparaison , est remarquable en ce que l'on détermine ladite distance effective entre la position actuelle de l'aéronef et ledit point de vol particulier, et en ce que ladite durée de comparaison varie en fonction de ladite distance effective :

- suivant une première courbe de convergence, lorsque l'aéronef doit décélérer ; et
- suivant une seconde courbe de convergence, lorsque l'aéronef doit accélérer, lesdites première et seconde courbes de convergence étant différentes et formant un cône de convergence qui est asymétrique et qui présente au moins en partie des valeurs différentes selon que l'aéronef est en retard ou en avance par rapport à la contrainte de temps.

Ainsi, grâce à la variation de la durée de comparaison, en fonction de la distance effective, on réduit le nombre de remises à jour de la vitesse de consigne. De plus, la remise à jour n'est réalisée que lorsqu'elle est effectivement nécessaire. En effet, lorsque l'aéronef est éloigné du point de vol particulier assujetti à ladite contrainte de temps, on prévoit une distance de comparaison plus importante (en général de plusieurs dizaines de secondes), ce qui a pour conséquence de relâcher la limite qui déclenche la remise à jour de ladite vitesse de consigne et réduit donc le nombre de remises à jour. En revanche, lorsque l'aéronef se rapproche dudit point de vol particulier, on resserre la limite qui déclenche la remise à jour (en général à quelques secondes, comme dans le procédé usuel précité) de manière à réaliser toutes les remises à jour nécessaires, afin que l'aéronef atteigne bien ledit point de vol particulier audit temps prédéterminé (et ceci à une très petite marge près).

De façon avantageuse, lorsque ladite distance effective :

- est supérieure à une première distance, ladite durée de comparaison présente une première valeur constante ;
- est inférieure à une seconde distance qui est inférieure à ladite première distance, ladite durée de comparaison présente une seconde valeur constante qui est inférieure à ladite première valeur constante ; et
- est comprise entre lesdites première et seconde distances, ladite durée de comparaison varie progressivement de ladite première valeur constante à ladite seconde valeur constante.

Dans ce cas, avantageusement :

- ladite seconde distance correspond à la distance parcourue par l'aéronef pendant une durée prédéterminée à vitesse maximale ; et/ou
- lorsque ladite distance effective est comprise entre ladite première distance et une troisième distance qui est supérieure à ladite première distance, ladite durée de comparaison correspond à ladite première valeur et, lorsque ladite distance effective est supérieure à ladite troisième distance, on ne remet pas à jour ladite vitesse de consigne.

Selon l'invention, ledit cône de convergence est asymétrique, c'est-à-dire présente au moins en partie des valeurs différentes selon que l'aéronef est en retard ou en avance par rapport à la contrainte de temps. Cette caractéristique permet de prendre en compte les capacités différentes de l'aéronef à accélérer et à décélérer, respectivement.

De façon avantageuse, au moins l'un des paramètres définissant ledit cône de convergence dépend au moins de l'une des caractéristiques suivantes :

- la capacité de l'aéronef à accélérer ;
- la capacité de l'aéronef à décélérer ; et
- le type dudit plan de vol (par exemple un plan de vol pour un vol à basse altitude).

Par ailleurs, selon l'invention, à l'étape d), après une remise à jour de la vitesse de consigne, on remet également à jour au moins un paramètre de prédiction (tel que la quantité de carburant disponible par exemple), en utilisant ladite vitesse de consigne ainsi remise à jour.

La présente invention concerne également un dispositif de calcul d'au moins une vitesse de consigne pour un aéronef qui est guidé à ladite vitesse de consigne suivant un plan de vol présentant au moins une contrainte de temps qui contraint l'aéronef à rejoindre un point de vol particulier à un temps de vol prédéterminé.

Selon l'invention, ledit dispositif du type comportant :

- des premiers moyens pour déterminer le temps effectif auquel l'aéronef rejoint ledit point de vol particulier, en tenant compte de la vitesse de consigne actuelle ;
- des deuxièmes moyens pour calculer un intervalle de temps correspondant à la différence entre ledit temps prédéterminé et ledit temps effectif ;
- des troisièmes moyens pour comparer cet intervalle de temps à une durée de comparaison ; et
- des quatrièmes moyens pour remettre à jour ladite vitesse de consigne que l'on applique à l'aéronef, si ledit intervalle de temps est supérieur à ladite durée de comparaison,

est remarquable en ce qu'il comporte de plus :

- des cinquièmes moyens pour déterminer la distance effective entre la position actuelle de l'aéronef et ledit point de vol particulier ; et

- des sixièmes moyens reliés auxdits troisièmes moyens, pour déterminer ladite durée de comparaison qui dépend de ladite distance effective de manière à diminuer au moins en partie lorsque ladite distance effective diminue et qui varie suivant un cône de convergence qui est asymétrique et qui présente au moins en partie des valeurs différentes selon que l'aéronef est en retard ou en avance par rapport à la contrainte de temps.

En outre, avantageusement :

- ledit dispositif comporte de plus des septièmes moyens pour remettre à jour au moins un paramètre de prédiction, en utilisant une vitesse de consigne remise à jour ; et/ou
- lesdits quatrièmes moyens prévoient le maintien de l'aéronef légèrement en avance, pour garder une marge pour le calcul.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

Les figures 2 à 5 sont des graphiques montrant des courbes de convergence permettant de bien expliquer la présente invention.

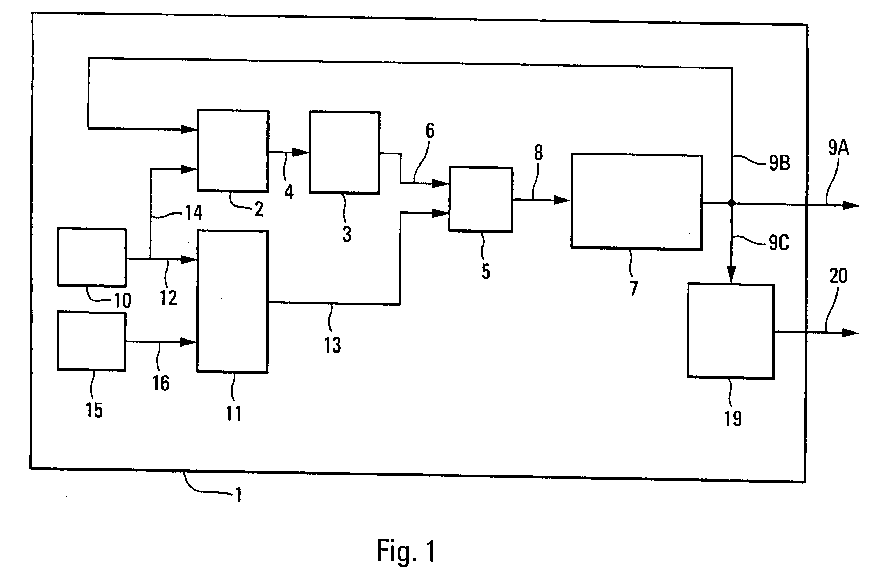

Le dispositif 1 conforme à l'invention et représenté schématiquement sur la figure 1 est destiné à calculer au moins une vitesse de consigne VC pour un aéronef A, en particulier un avion de transport militaire, qui est guidé à ladite vitesse de consigne VC suivant un plan de vol présentant au moins une contrainte de temps qui contraint ledit aéronef A à rejoindre un point de vol particulier P0 à un temps prédéterminé T0.

Ledit dispositif de calcul 1 qui est, par exemple, intégré dans (ou associé à) un système de gestion de vol de type FMS ("Flight Management System" en anglais) embarqué sur l'aéronef A, comporte de façon usuelle :

- des moyens 2 pour déterminer le temps effectif Teff auquel l'aéronef A rejoint ledit point de vol particulier P0, en tenant compte de la vitesse de consigne VC actuelle ;
- des moyens 3 qui sont reliés par une liaison 4 auxdits moyens 2, pour calculer un intervalle de temps $\Delta t$ correspondant à la différence entre ledit temps prédéterminé T0 et ledit temps effectif Teff et tel que $\Delta t = T0 - Teff$. Ainsi, lorsque $\Delta t$ est positif (c'est-à-dire lorsque T0 est supérieur à Teff), l'aéronef A est en avance par rapport audit temps prédéterminé T0 (puisqu'il rejoint dans les conditions actuelles le point particulier P0 à un temps Teff qui est inférieur audit temps T0) de sorte que ledit aéronef A doit alors décélérer pour pouvoir respecter ladite contrainte de temps. En revanche, lorsque $\Delta t$ est négatif (et T0 est inférieur à Teff), l'aéronef A est en retard et doit accélérer s'il veut respecter la contrainte de temps ;
- des moyens 5 qui sont reliés par une liaison 6 auxdits moyens 4, pour comparer cet intervalle de temps $\Delta t$ à une durée de comparaison DC ; et
- des moyens 7 qui sont reliés par une liaison 8 auxdits moyens 5, pour remettre à jour de façon usuelle ladite vitesse de consigne VC que l'on applique à l'aéronef A, si ledit intervalle de temps effectif $\Delta t$ est supérieur à ladite durée de comparaison DC. Lesdits moyens 7 peuvent transmettre la vitesse de consigne VC ainsi remise à jour, à l'aide d'une liaison 9A, à des dispositifs utilisateurs non représentés.

Selon l'invention, ledit dispositif 1 comporte de plus :

- des moyens 10 pour déterminer la distance effective deff entre la position actuelle P1 de l'aéronef A et ledit point de vol particulier P0 ; et
- des moyens 11 qui sont reliés par une liaison 12 auxdits moyens 10, pour déterminer (selon une manière particulière conforme à l'invention) ladite durée de comparaison DC et la transmettre par une liaison 13 auxdits moyens 5. Plus précisément, selon l'invention, ladite durée de comparaison DC est variable et dépend de ladite distance effective deff de manière à diminuer au moins en partie lorsque ladite distance effective deff diminue, comme précisé ci-dessous.

Grâce au calcul de la durée de comparaison DC et à sa variation en fonction de la distance effective deff, comme précisé ci-dessous, on réduit le nombre de remises à jour de la vitesse de consigne VC.

De plus, la remise à jour n'est réalisée que lorsqu'elle est effectivement nécessaire.

En effet, lorsque l'aéronef A est éloigné dudit point de vol particulier P0 assujetti à ladite contrainte de temps, ladite distance de comparaison DC est plus importante, ce qui a pour conséquence de relâcher la limite qui déclenche la remise à jour. En revanche, lorsque l'aéronef A se rapproche dudit point de vol particulier P0, ladite limite qui déclenche la remise à jour est resserrée de manière à pouvoir réaliser toutes les remises à jour nécessaires.

De plus, lesdits moyens 2 déterminent le temps effectif Teff auquel l'aéronef A rejoint ledit point de vol particulier P0, à l'aide de la consigne de vitesse VC calculée ou remise à jour précédemment et reçue desdits moyens 7 par une liaison 9B, et à l'aide de ladite distance effective deff entre la position actuelle P1 de l'aéronef A et ledit point de vol particulier P0, reçue desdits moyens 10 par une liaison 14.

En outre, lesdits moyens 11 déterminent la durée de comparaison qui est utilisée par les moyens de comparaison 5, à partir d'un diagramme :

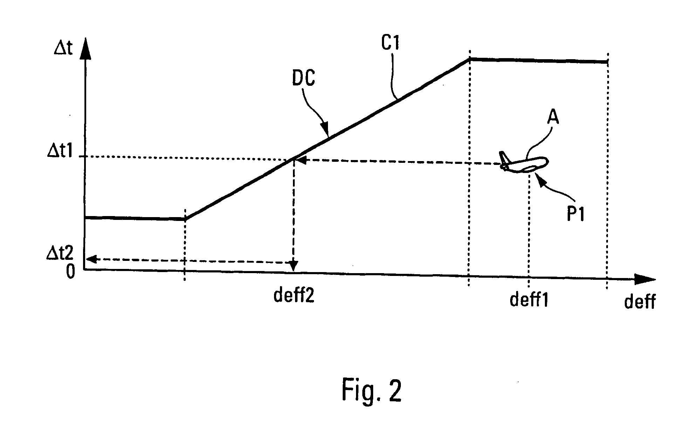

- qui est représenté sur les figures 2 à 5 ;
- qui est prédéterminé ;
- qui comporte des courbes de convergence C1 et C2 indiquant des valeurs de durée de comparaison DC en fonction de valeurs de distance effective deff ; et
- qui est enregistré dans une base de données 15 reliée par une liaison 16 auxdits moyens 11,

ainsi qu'à partir de ladite distance effective deff reçue desdits moyens 10.

Comme on peut le voir sur la figure 2, à une distance effective deff1 dudit point de vol particulier P0, l'intervalle de temps $\Delta t1$ est inférieur à la durée de comparaison DC (de sorte qu'aucune remise à jour de la vitesse de consigne VC est nécessaire), et ceci jusqu'à une distance effective deff2, à laquelle une telle remise à jour doit être réalisée, sinon ledit intervalle de temps $\Delta t1$ deviendrait supérieur à ladite durée de comparaison DC. A la suite de cette remise à jour, on obtient un intervalle de temps $\Delta t2$ qui ne nécessite plus aucune remise à jour jusqu'audit point de vol particulier P0 (où deff est nul).

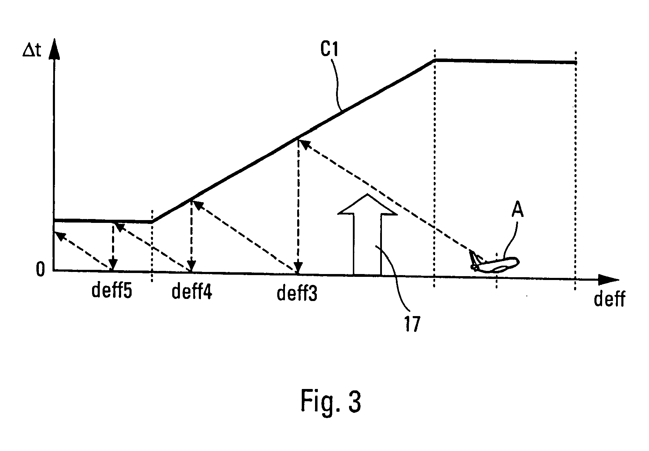

La figure 3 illustre une situation similaire à celle de la figure 2, avec des rafales de vent permanentes et très fortes, mises en évidence par une flèche 17 qui ont pour effet de faire augmenter rapidement l'intervalle de temps $\Delta t$ de sorte que des remises à jour successives sont nécessaires à des distances deff3, deff4 et deff5, jusqu'audit point particulier P0.

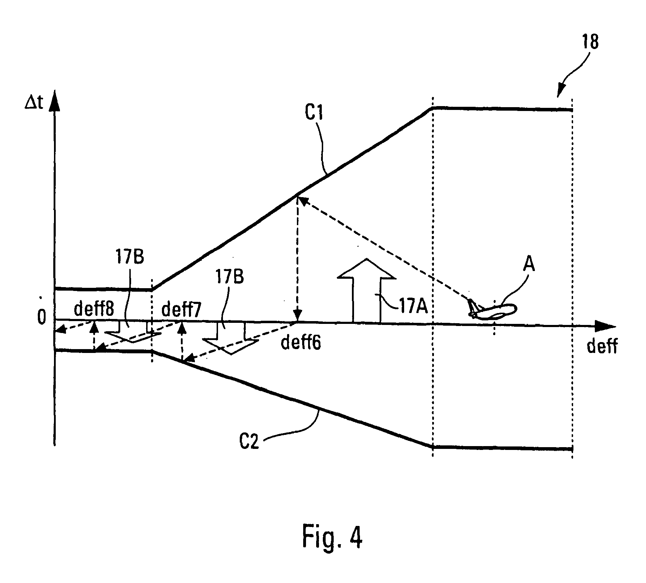

Bien entendu, les rafales de vent peuvent avoir pour conséquence que l'aéronef A soit, soit en avance, soit en retard, par rapport à la contrainte de temps. C'est pourquoi on prévoit deux courbes de convergence C 1 et C2, comme représenté sur la figure 4. La courbe de convergence C1 correspond au cas où l'aéronef A doit décélérer et la courbe de convergence C2 correspond au cas où l'aéronef A doit accélérer, afin de respecter ladite contrainte de temps. Elles correspondent donc à des signes différents de l'intervalle de temps $\Delta t$ (signe positif pour la courbe de convergence C1, signe négatif pour la courbe de convergence C2).

Les deux courbes de convergence C1 et C2 forment un cône de convergence 18.

Ainsi, comme on peut le voir sur la figure 4 :

- des premières rafales de vent 17A peuvent entraîner une remise à jour de la vitesse de consigne VC à une distance deff6, telle que l'aéronef A doit décélérer ; et
- des secondes rafales de vent 17B peuvent entraîner des remises à jour de la vitesse de consigne VC à des distances deff7 et deff8, telles que l'aéronef A doit accélérer.

Dans un mode de réalisation préféré, ledit cône de divergence 18 est tel que lorsque ladite distance effective deff :

- est supérieure à une première distance d1, ladite durée de comparaison DC présente une première valeur constante DC1A, DC1B ;
- est inférieure à une seconde distance d2 qui est inférieure à ladite première distance d1, ladite durée de comparaison DC présente une seconde valeur constante DC2A, DC2B ; et
- est comprise entre ladite première distance d1 et ladite seconde distance d2, ladite durée de comparaison DC varie progressivement de ladite première valeur constante DC1A, DC1B à ladite seconde valeur constante DC2A, DC2B. L'écart entre d1 et d2 est de préférence important, pour éviter des changements trop brusques des limites de comparaison.

Ladite seconde distance d2 correspond de préférence à la distance parcourue par l'aéronef A pendant une durée prédéterminée, par exemple 2 minutes, à vitesse maximale. Cette seconde distance d2 définit la limite, à partir de laquelle la contrainte de temps doit être totalement respectée par l'aéronef A.

En outre, dans un mode de réalisation particulier, lorsque ladite distance effective deff est comprise entre ladite première distance d1 et une troisième distance d3 qui est supérieure à ladite première distance d1, ladite durée de comparaison correspond à ladite première valeur DC1A, DC1B, et, lorsque ladite distance effective deff est supérieure à ladite troisième distance d3, le dispositif 1 ne remet pas à jour ladite vitesse de consigne VC, puisque l'aéronef A se trouve encore trop loin du point de vol particulier P0.

A titre d'illustration, par exemple lorsque le plan de vol comporte une trajectoire de vol à basse altitude, on peut utiliser les valeurs suivantes :

- d1 = 150 NM (mile nautique), environ 278 km (kilomètres) ;
- d2 = 10 NM, environ 18 km ;
- d3 = 200, environ 370 km ;
- DC2A = 5 secondes ; et
- DC2B = 5 secondes.

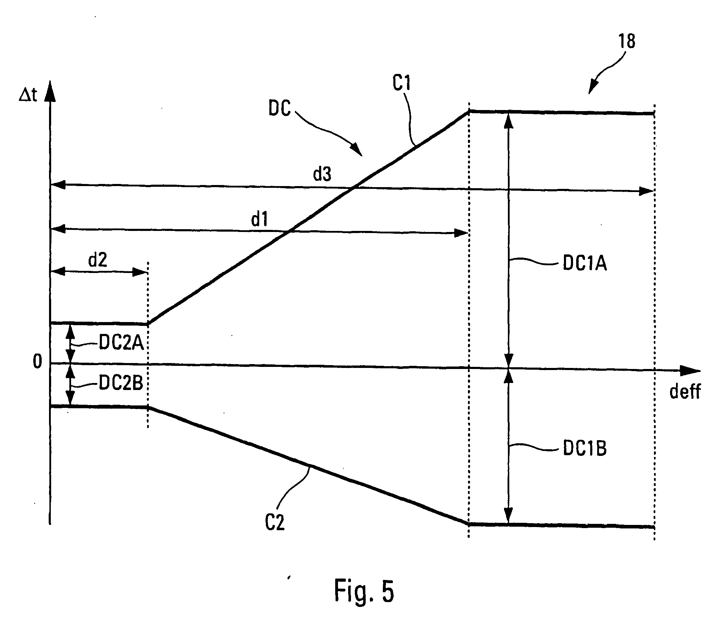

Par ailleurs, dans un mode de réalisation préféré, ledit cône de convergence 18 est asymétrique, comme représenté sur les figures 4 et 5, c'est-à-dire qu'il prend en compte des valeurs différentes selon que l'aéronef A est en retard ou en avance par rapport à la contrainte de temps. Ainsi, les premières valeurs constantes DC1A et DC1B prennent des valeurs différentes, par exemple respectivement 60 secondes et 30 secondes. Cette dernière caractéristique permet de tenir compte des capacités différentes de l'aéronef A à accélérer (courbe de convergence C2) et à décélérer (courbe de convergence C1). Une accélération est bien entendu plus difficile à réaliser et plus coûteuse qu'une décélération.

Par ailleurs, au moins l'un des paramètres définissant ledit cône de convergence 18 dépend au moins de l'une des caractéristiques suivantes :

- la capacité de l'aéronef A à accélérer ;
- la capacité de l'aéronef A à décélérer ; et
- le type de plan de vol.

Par ailleurs, le dispositif 1 conforme à l'invention comporte de plus des moyens 19 qui sont reliés par une liaison 9C auxdits moyens 7, pour remettre à jour au moins un paramètre de prédiction (tel que la quantité de carburant disponible à bord de l'aéronef A audit point de vol particulier P0), en utilisant la vitesse de consigne VC remise à jour.

Le dispositif 1 conforme à l'invention est particulièrement bien approprié à être utilisé sur un aéronef A volant le long d'un plan de vol qui présente au moins une section de vol à basse altitude, puisque, dans un tel cas, une remise à jour de la vitesse de consigne VC entraîne à chaque fois une remise à jour de la trajectoire verticale de ladite section de vol à basse altitude, ce qui nécessite une capacité de calcul et un temps de calcul élevés. Par conséquent, la réduction du nombre de remises à jour obtenue grâce audit dispositif 1 est très intéressante dans cette application.

De préférence, dans une telle application, on maintient l'aéronef A légèrement en avance pour garder une marge pour le calcul, en cas de remise à jour de ladite vitesse de consigne VC qui entraîne une remise à jour de la trajectoire verticale. Pour ce faire, on peut utiliser l'expression suivante :

$$VCcommande = VCthéorique\ +\ \Delta VC,$$

lorsque la distance deff est supérieure ou égale à la distance d2.
dans laquelle $\Delta VC$ représente une valeur prédéterminée qui est fonction des caractéristiques de l'aéronef et qui est choisie de préférence dans l'intervalle [1NM ; 5 NM] (environ [1,8 km ; 9 km]).

**Revendications**

1.  Procédé de calcul d'au moins une vitesse de consigne pour un aéronef (A) qui est guidé à ladite vitesse de consigne suivant un plan de vol présentant au moins une contrainte de temps qui contraint l'aéronef (A) à rejoindre un point de vol particulier à un temps prédéterminé, procédé selon lequel :

    a) on détermine le temps effectif auquel l'aéronef (A) rejoint ledit point de vol particulier, en tenant compte de la vitesse de consigne actuelle ;
    b) on calcule un intervalle de temps ($\Delta t$) correspondant à la différence entre ledit temps prédéterminé et ledit temps effectif ;
    c) on compare cet intervalle de temps ($\Delta t$) à une durée de comparaison (DC) qui est variable et qui dépend de la distance effective (deff) entre la position actuelle (P1) de l'aéronef (A) et ledit point de vol particulier de manière à diminuer au moins en partie lorsque ladite distance effective (deff) diminue ; et
    d) on remet à jour ladite vitesse de consigne que l'on applique à l'aéronef (A), si ledit intervalle de temps ($\Delta t$) est supérieur à ladite durée de comparaison (DC),

**caractérisé en ce que** l'on détermine ladite distance effective (deff) entre la position actuelle (P1) de l'aéronef (A) et ledit point de vol particulier, et **en ce que** ladite durée de comparaison (DC) varie en fonction de ladite distance effective (deff) :

- suivant une première courbe de convergence (C1), lorsque l'aéronef (A) doit décélérer ; et
- suivant une seconde courbe de convergence (C2), lorsque l'aéronef (A) doit accélérer, lesdites première et seconde courbes de convergence (C1, C2) étant différentes et formant un cône de convergence (18) qui est asymétrique et qui présente au moins en partie des valeurs différentes selon que l'aéronef (A) est en retard ou en avance par rapport à la contrainte de temps.

2. Procédé selon la revendication 1,
**caractérisé en ce que**, lorsque ladite distance effective (deff) :

- est supérieure à une première distance (d1), ladite durée de comparaison (DC) présente une première valeur constante (DC1A, DC1B);
- est inférieure à une seconde distance (d2) qui est inférieure à ladite première distance (d1), ladite durée de comparaison (DC) présente une seconde valeur constante (DC2A, DC2B) qui est inférieure à ladite première valeur constante (DC1A, DC1B); et
- est comprise entre lesdites première et seconde distances (d1, d2), ladite durée de comparaison (DC) varie progressivement de ladite première valeur constante (DC1A,DC1B) à ladite seconde valeur constante (DC2A, DC2B).

3. Procédé selon la revendication 2,
**caractérisé en ce que** ladite seconde distance (d2) correspond à la distance parcourue par l'aéronef (A) pendant une durée prédéterminée à vitesse maximale.

4. Procédé selon l'une des revendications 2 et 3,
**caractérisé en ce que**, lorsque ladite distance effective (deff) est comprise entre ladite première distance (d1) et une troisième distance (d3) qui est supérieure à ladite première distance (d1), ladite durée de comparaison (DC) correspond à ladite première valeur (DC1A, DC1B), et **en ce que**, lorsque ladite distance effective (deff) est supérieure à ladite troisième distance (d3), on ne remet pas à jour ladite vitesse de consigne.

5. Procédé selon l'une quelconque des revendications précédentes,
**caractérisé en ce qu'**au moins l'un des paramètres définissant ledit cône de convergence (18) dépend au moins de l'une des caractéristiques suivantes :

- la capacité de l'aéronef (A) à accélérer ;
- la capacité de l'aéronef (A) à décélérer ; et
- le type dudit plan de vol.

6. Procédé selon l'une quelconque des revendications précédentes,
**caractérisé en ce qu'**à l'étape d), après une remise à jour de la vitesse de consigne, on remet à jour au moins un paramètre de prédiction en utilisant ladite vitesse de consigne.

7. Procédé selon l'une quelconque des revendications précédentes, pour un aéronef dont le plan de vol présente au moins une section de vol à basse altitude,
**caractérisé en ce qu'**à l'étape d), après une remise à jour de la vitesse de consigne, on remet à jour la trajectoire verticale de ladite section de vol à basse altitude, et **en ce que** l'on maintient l'aéronef (A) légèrement en avance pour garder une marge pour le calcul.

8. Dispositif de calcul d'au moins une vitesse de consigne pour un aéronef (A) qui est guidé à ladite vitesse de consigne suivant un plan de vol présentant au moins une contrainte de temps qui contraint l'aéronef (A) à rejoindre un point de vol particulier à un temps prédéterminé, ledit dispositif (1) comportant :

- des premiers moyens (2) pour déterminer le temps effectif auquel l'aéronef (A) rejoint ledit point de vol particulier, en tenant compte de la vitesse de consigne actuelle ;
- des deuxièmes moyens (3) pour calculer un intervalle de temps Δt) correspondant à la différence entre ledit temps prédéterminé et ledit temps effectif ;

- des troisièmes moyens (5) pour comparer cet intervalle de temps (Δt) à une durée de comparaison (DC) qui est variable ; et
- des quatrièmes moyens (7) pour remettre à jour ladite vitesse de consigne que l'on applique à l'aéronef (A), si ledit intervalle de temps (Δt) est supérieur à ladite durée de comparaison (DC),

**caractérisé en ce qu'**il comporte de plus :

- des cinquièmes moyens (10) pour déterminer la distance effective (deff) entre la position actuelle (P1) de l'aéronef (A) et ledit point de vol particulier ; et
- des sixièmes moyens (11) reliés auxdits troisièmes moyens (5), pour déterminer ladite durée de comparaison (DC) qui dépend de ladite distance effective (deff) de manière à diminuer au moins en partie lorsque ladite distance effective (deff) diminue et qui varie suivant un cône de convergence (18) qui est asymétrique et qui présente au moins en partie des valeurs différentes selon que l'aéronef (A) est en retard ou en avance par rapport à la contrainte de temps.

9. Dispositif selon la revendication 8,
   **caractérisé en ce qu'**il comporte de plus des septièmes moyens (19) pour remettre à jour au moins un paramètre de prédiction, en utilisant une vitesse de consigne remise à jour.

10. Dispositif selon l'une des revendications 8 et 9,
    **caractérisé en ce que** lesdits quatrièmes moyens (7) prévoient le maintien de l'aéronef (A) légèrement en avance, pour garder une marge pour le calcul.

11. Aéronef,
    **caractérisé en ce qu'**il comporte un dispositif (1) tel que celui spécifié sous l'une quelconque des revendications 8 à 10.

12. Aéronef,
    **caractérisé en ce qu'**il comporte un dispositif (1) susceptible de mettre en oeuvre le procédé spécifié sous l'une quelconque des revendications 1 à 7.


**Claims**

1. A method of calculating at least one target speed for an aircraft (A) which is guided at said target speed along a flight plan exhibiting at least one time constraint which constrains the aircraft (A) to get to a particular flight point at a predetermined time, according to which method:

   a) the actual time at which the aircraft (A) gets to said particular flight point is determined, taking account of the current target speed;
   b) a time interval (Δt) corresponding to the difference between said predetermined time and said actual time is calculated;
   c) this time interval (Δt) is compared with a duration of comparison (DC) which is variable and which depends on the actual distance (deff) between the current position (P1) of the aircraft (A) and said particular flight point in such a way as to decrease at least in part when said actual distance (deff) decreases; and
   d) said target speed is updated, which is applied to the aircraft (A), if said time interval (Δt) is greater than said duration of comparison (DC),

   **characterized in that** said actual distance (deff) between the current position (P1) of the aircraft (A) and said particular flight point is determined, and **in that** said duration of comparison (DC) varies as a function of said actual distance (deff):

   - along a first convergence curve (C1), when the aircraft (A) has to decelerate; and
   - along a second convergence curve (C2), when the aircraft (A) has to accelerate, said first and second convergence curves (C1, C2) being different and forming a cone of convergence (18) which is asymmetric and which exhibits at least in part different values depending on whether the aircraft (A) is late or early with respect to the time constraint.

**2.** The method as claimed in claim 1,
**characterized in that**, when said actual distance (deff) :

- is greater than a first distance (d1), said duration of comparison (DC) exhibits a first constant value (DC1A, DC1B);
- is less than a second distance (d2) which is less than said first distance (d1), said duration of comparison (DC) exhibits a second constant value (DC2A, DC2B) which is less than said first constant value (DC1A, DC1B); and
- lies between said first and second distances (d1, d2), said duration of comparison (DC) varies progressively from said first constant value (DC1A, DC1B) to said second constant value (DC2A, DC2B).

**3.** The method as claimed in claim 2,
**characterized in that** said second distance (d2) corresponds to the distance traveled by the aircraft (A) over a predetermined duration at maximum speed.

**4.** The method as claimed in one of claims 2 and 3,
**characterized in that**, when said actual distance (deff) lies between said first distance (d1) and a third distance (d3) which is greater than said first distance (d1), said duration of comparison (DC) corresponds to said first value (DC1A, DC1B), and **in that**, when said actual distance (deff) is greater than said third distance (d3), said target speed is not updated.

**5.** The method as claimed in any one of the preceding claims,
**characterized in that** at least one of the parameters defining said cone of convergence (18) depends at least on one of the following characteristics:

- the ability of the aircraft (A) to accelerate;
- the ability of the aircraft (A) to decelerate; and
- the type of said flight plan.

**6.** The method as claimed in any one of the preceding claims,
**characterized in that** in step d), after an updating of the target speed, at least one prediction parameter is updated using said target speed.

**7.** The method as claimed in any one of the preceding claims, for an aircraft whose flight plan exhibits at least one flight section at low altitude,
**characterized in that** in step d), after an updating of the target speed, the vertical trajectory of said flight section at low altitude is updated, and **in that** the aircraft (A) is kept slightly early so as to maintain a margin for the calculation.

**8.** A device for calculating at least one target speed for an aircraft (A) which is guided at said target speed along a flight plan exhibiting at least one time constraint which constrains the aircraft (A) to get to a particular flight point at a predetermined time, said device (1) comprising:

- first means (2) for determining the actual time at which the aircraft (A) gets to said particular flight point, taking account of the current target speed;
- second means (3) for calculating a time interval ($\Delta t$) corresponding to the difference between said predetermined time and said actual time;
- third means (5) for comparing this time interval ($\Delta t$) with a duration of comparison (DC) which is variable; and
- fourth means (7) for updating said target speed, which is applied to the aircraft (A), if said time interval ($\Delta t$) is greater than said duration of comparison (DC),

**characterized in that** it moreover comprises:

- fifth means (10) for determining the actual distance (deff) between the current position (P1) of the aircraft (A) and said particular flight point; and
- sixth means (11) connected to said third means (5), for determining said duration of comparison (DC) which depends on said actual distance (deff) in such a way as to decrease at least in part when said actual distance (deff) decreases and which varies along a cone of convergence (18) which is asymmetric and which exhibits at least in part different values depending on whether the aircraft (A) is late or early with respect to the time constraint.

**9.** The device as claimed in claim 8,
**characterized in that** it moreover comprises seventh means (19) for updating at least one prediction parameter, using an updated target speed.

**10.** The device as claimed in one of claims 8 and 9,
**characterized in that** said fourth means (7) provide for the keeping of the aircraft (A) slightly early, so as to maintain a margin for the calculation.

**11.** An aircraft,
**characterized in that** it comprises a device (1) such as that specified under any one of claims 8 to 10.

**12.** An aircraft,
**characterized in that** it comprises a device (1) able to implement the method specified under any one of claims 1 to 7.

**Patentansprüche**

**1.** Verfahren zum Berechnen mindestens einer Sollgeschwindigkeit für ein Flugzeug (A), das bei dieser Sollgeschwindigkeit einem Flugplan folgend geführt wird, der mindestens eine Zeitbeschränkung aufweist, die erzwingt, dass das Flugzeug (A) einen bestimmten Flugpunkt zu einem vorgegebenen Zeitpunkt erreicht, wobei bei dem Verfahren:

a) der tatsächliche Zeitpunkt, zu dem das Flugzeug (A) den bestimmten Flugpunkt erreicht, unter Berücksichtigung der aktuellen Sollgeschwindigkeit bestimmt wird;
b) ein Zeitintervall ($\Delta t$) berechnet wird, das der Differenz zwischen dem vorgegebenen Zeitpunkt und dem tatsächlichen Zeitpunkt entspricht;
c) dieses Zeitintervall ($\Delta t$) mit einer Vergleichsdauer (DC) verglichen wird, die variabel ist und die von der tatsächlichen Distanz (deff) zwischen der aktuellen Position (P1) des Flugzeugs (A) und dem bestimmten Flugpunkt derart abhängig ist, dass sie sich zumindest teilweise verringert, wenn die tatsächliche Distanz (deff) geringer wird und
d) die auf das Flugzeug (A), angewandte Sollgeschwindigkeit aktualisiert wird, wenn das Zeitintervall ($\Delta t$) länger ist, als die Vergleichsdauer (DC),

**dadurch gekennzeichnet, dass** die tatsächliche Distanz (deff) zwischen der aktuellen Position (P1) des Flugzeugs (A) und dem bestimmten Flugpunkt bestimmt wird, und **dadurch**, dass die Vergleichsdauer (DC) in Abhängigkeit von der tatsächlichen Distanz (deff) variiert:

- gemäß einer ersten Konvergenzkurve (C1), wenn das Flugzeug (A) verzögern muss und
- gemäß einer zweiten Konvergenzkurve (C2), wenn das Flugzeug (A) beschleunigen muss, wobei die erste und die zweite Konvergenzkurve (C1, C2) sich unterscheiden und einen Konvergenzkegel (18) bilden, der asymmetrisch ist und zumindest teilweise in Abhängigkeit davon, ob das Flugzeug (A) bezogen auf die Zeitbeschränkung zu spät oder zu zeitig ist, unterschiedliche Werte aufweist.

**2.** Verfahren nach Anspruch 1,
**dadurch gekennzeichnet, dass**, wenn die tatsächliche Distanz (deff):

- größer ist als eine erste Distanz (d1), die Vergleichsdauer (DC) einen ersten konstanten Wert (DC1A, DC1B) aufweist;
- geringer ist als eine zweite Distanz (d2), die geringer ist als die erste Distanz (d1), die Vergleichsdauer (DC) einen zweiten konstanten Wert (DC2A, DC2B) aufweist, der geringer ist als der erste konstante Wert (DC1A, DC1 B) und
- im Bereich zwischen der ersten Distanz (d1) und der zweiten Distanz (d2) liegt, die Vergleichsdauer (DC) schrittweise von dem ersten konstanten Wert (DC1A, DC1B) zu dem zweiten konstanten Wert (DC2A, DC2B) variiert.

**3.** Verfahren nach Anspruch 2,
**dadurch gekennzeichnet, dass** die zweite Distanz (d2) der von dem Flugzeug (A) während einer vorbestimmten Zeitdauer bei Maximalgeschwindigkeit zurückgelegten Distanz entspricht.

**4.** Verfahren nach Anspruch 2 oder 3,
**dadurch gekennzeichnet, dass**, wenn die tatsächliche Distanz (deff) im Bereich zwischen der ersten Distanz (d1) und einer dritten Distanz (d3) liegt, die größer ist als die erste Distanz (d1), die Vergleichsdauer (DC) dem ersten Wert (DC1A, DC1B) entspricht und **dadurch**, **dass**, wenn die tatsächliche Distanz (deff) größer ist als die dritte Distanz (d3), die Sollgeschwindigkeit nicht aktualisiert wird.

**5.** Verfahren nach einem der vorhergehenden Ansprüche,
**dadurch gekennzeichnet, dass** zumindest einer der den Konvergenzkegel (18) bestimmenden Parameter mindestes von einem der folgenden Merkmale abhängt:

- der Beschleunigungsfähigkeit des Flugzeugs (A);
- der Verzögerungsfähigkeit des Flugzeugs (A) und
- der Art des Flugplans.

**6.** Verfahren nach einem der vorhergehenden Ansprüche,
**dadurch gekennzeichnet, dass** in Schritt d) nach einer Aktualisierung der Sollgeschwindigkeit mindestens ein Vorhersageparameter unter Verwendung der Sollgeschwindigkeit aktualisiert wird.

**7.** Verfahren nach einem der vorhergehenden Ansprüche für ein Flugzeug, dessen Flugplan mindestens einen Flugabschnitt auf niedriger Höhe aufweist,
**dadurch gekennzeichnet, dass** in Schritt d) nach einer Aktualisierung der Sollgeschwindigkeit die vertikale Flugbahn des Flugabschnitts auf niedriger Höhe aktualisiert wird, und **dadurch**, **dass** das Flugzeug (A) geringfügig voreilend gehalten wird um einen Spielraum für die Berechnung zu behalten.

**8.** Einrichtung zum Berechnen mindestens einer Sollgeschwindigkeit für ein Flugzeug (A), das bei dieser Sollgeschwindigkeit einem Flugplan folgend geführt wird, der mindestens eine Zeitbeschränkung aufweist, die erzwingt, dass das Flugzeug (A) einen bestimmten Flugpunkt zu einem vorgegebenen Zeitpunkt erreicht, wobei die Einrichtung (1) umfasst:

- erste Mittel (2) um unter Berücksichtigung der aktuellen Sollgeschwindigkeit den tatsächlichen Zeitpunkt, zu dem das Flugzeug (A) den bestimmten Flugpunkt erreicht, zu bestimmen;
- zweite Mittel (3) um ein Zeitintervall ($\Delta t$) zu berechnen, das der Differenz zwischen dem vorgegebenen Zeitpunkt und dem tatsächlichen Zeitpunkt entspricht;
- dritte Mittel (5), um dieses Zeitintervall $\Delta t$ mit einer Vergleichsdauer DC zu vergleichen, die variabel ist und
- vierte Mittel (7), um die auf das Flugzeug (A) angewandte Sollgeschwindigkeit zu aktualisieren, wenn das Zeitintervall ($\Delta t$) länger ist, als die Vergleichsdauer (DC),

**dadurch gekennzeichnet, dass** sie außerdem Folgendes umfasst:

- fünfte Mittel (10) zum Bestimmen der tatsächlichen Distanz (deff) zwischen der aktuellen Position (P1) des Flugzeugs (A) und dem bestimmten Flugpunkt und
- sechste Mittel (11), die mit den dritten Mitteln (5) verbunden sind, um die Vergleichsdauer (DC) zu bestimmen, die von der tatsächlichen Distanz (deff) derart abhängig ist, dass sie sich zumindest teilweise verringert, wenn die tatsächliche Distanz (deff) geringer wird und die gemäß einem Konvergenzkegel (18) variiert, der asymmetrisch ist und zumindest teilweise in Abhängigkeit davon, ob das Flugzeug bezogen auf die Zeitbeschränkung zu spät oder zu zeitig ist, unterschiedliche Werte aufweist.

**9.** Einrichtung nach Anspruch 8,
**dadurch gekennzeichnet, dass** sie außerdem siebte Mittel (19) umfasst, um mindestens einen Vorhersageparameter unter Verwendung einer aktualisierten Sollgeschwindigkeit zu aktualisieren.

**10.** Einrichtung nach Anspruch 8 oder 9,
**dadurch gekennzeichnet, dass** die vierten Mittel (7) vorsehen, dass das Flugzeug geringfügig voreilend gehalten wird, um einen Spielraum für die Berechnung zu behalten.

**11.** Flugzeug,
**dadurch gekennzeichnet, dass** es eine Einrichtung (1) wie die unter einem der Ansprüche 8 bis 10 spezifizierte umfasst.

12. Flugzeug,
**dadurch gekennzeichnet, dass** es eine Einrichtung (1) umfasst, die geeignet ist, das unter einem der Ansprüche 1 bis 7 spezifizierte Verfahren durchzuführen.

Fig. 1

Fig. 2

Fig. 3

EP 1 564 527 B1

Fig. 4

EP 1 564 527 B1

Fig. 5

EP 1 564 527 B1

**EP 1 564 527 B1**

## RÉFÉRENCES CITÉES DANS LA DESCRIPTION

**Documents brevets cités dans la description**

- US 5121325 A